# EUROPÄISCHE PATENTSCHRIFT

(11) **EP 2 283 217 B1**
(45) Veröffentlichungstag und Bekanntmachung des Hinweises auf die Patenterteilung: **26.10.2011**
(21) Anmeldenummer: 09745534.9
(22) Anmeldetag: 11.05.2009
(51) Int. Cl.: F01P 3/12, F01P 7/16, B61J 3/12, B61H 9/00

(54) **SCHIENENGEFÜHRTES TRIEBFAHRZEUG**
RAIL-BOUND TRACTIVE UNIT
VÉHICULE DE TRACTION SUR RAILS

(30) Priorität: 10.05.2008 DE 102008023175
(43) Veröffentlichungstag der Anmeldung: 16.02.2011
(73) Patentinhaber: Schalker Eisenhütte Maschinenfabrik GmbH, 45881 Gelsenkirchen (DE)
(72) Erfinder: SCHNEIDERS, Egon, 57319 Bad Berleburg (DE)
(74) Vertreter: Gesthuysen, von Rohr & Eggert
(86) Internationale Anmeldenummer: PCT/EP2009/003322
(87) Internationale Veröffentlichungsnummer: WO 2009/138200

(56) Entgegenhaltungen:
- EP-A2- 1 270 896
- WO-A1-95/01500
- DE-A1- 10 339 211
- GB-A- 2 095 392
- US-A- 2 633 541
- US-A- 3 752 132

## Beschreibung

Die Erfindung betrifft ein schienengeführtes Triebfahrzeug mit den Oberbegriffsmerkmalen des Patentanspruches 1.

Schienengeführte Triebfahrzeuge sind aus dem Stand der Technik bekannt. Beispielsweise kann das Triebfahrzeug einen zum Antrieb eines Elektromotors vorgesehenen Dieselmotor mit einem Motorkühler aufweisen. Ferner können elektrische Bremsmittel vorgesehen sein, die zum Bremsen des Triebfahrzeugs Bewegungsenergie in elektrische Energie und die elektrische Energie anschließend in Wärmeenergie umwandeln. Zum Umwandeln der elektrischen Energie in Wärmeenergie kann ein mit einer Luftkühlung ausgerüsteter Bremswiderstand vorgesehen sein, wobei die Wärmeenergie an die Atmosphäre abgeführt wird. Im Fahrbetrieb kann die Luftkühlung durch eine Dachanordnung des Bremswiderstands bereitgestellt werden. Um jedoch auch bei geringen Fahrgeschwindigkeiten eine ausreichende Kühlung des Bremswiderstandes zu ermöglichen, wird in der Regel ein raumgreifender Lüfter eingesetzt. Der Abluftaustritt des Bremswiderstandes befindet sich zumeist in der Dachmitte des Triebfahrzeuges. Die über 350 °C warme Abluft kann über das Lokomotivendach hinwegstreichen und vermischt sich dabei mit der Umgebungsluft, was zur Abkühlung führt. Bei Lokomotiven mit Führerständen an den Fahrzeugenden stellen die durch den Bremswiderstandslüfter erzeugte Lärmemission und die hohe Ablaßtemperatur am Bremswiderstandsschacht in der Regel keine Probleme dar.

Bei Lokomotiven mit einem mittig angeordneten Führerhaus, die für den Einsatz als Rangier- und Streckenlokomotive konzipiert sind, kann der Einsatz von luftgekühlten Bremswiderständen aufgrund der hohen Temperatur der Abluft des Bremswiderstandslüfters zu einer Personengefährdung führen. Zwar kühlt die aus dem Bremswiderstandsschacht entweichende heiße Abluft auf dem Weg zum Führerhaus ab, beträgt im Bereich des Führerhauses jedoch noch immer mehr als 100 °C. Darüber hinaus beeinträchtigen die durch den Bremswiderstandslüfter entstehenden Lärmemissionen die Verständigung zwischen den am Rangiergeschehen beteiligten Personen. Dies führt dazu, daß bei Lokomotiven mit einem mittig angeordneten Führerhaus luftgekühlte Bremswiderstände nicht eingesetzt werden können.

Luftgekühlte Bremswiderstände besitzen darüber hinaus keine nennenswerte thermische Zeitkonstante. Die in dem Bremswiderstand erzeugte Wärmemenge muß unmittelbar an die Umgebung abgeführt werden, um eine thermische Überlastung und Beschädigung des Bremswiderstandes zu verhindern. Um auch hohe Bremswärme effektiv an die Atmosphäre abführen zu können, ist aus der DE 103 39 211 A1, die den nächstliegenden Stand der Technik bildet, bekannt, den Bremswiderstand durch eine Kühlflüssigkeit zu kühlen. Durch diese Flüssigkühlung wird die Kühlungseffektivität gegenüber luftgekühlten Bremswiderständen beträchtlich erhöht. Auf einen zusätzlichen Luftkühler für die Bremsmittel selbst oder für den Bremskühlkreislauf kann verzichtet werden. Die Bremswärme wird über die Kühlflüssigkeit zum ohnehin vorhandenen Motorkühler des Verbrennungsmotors transportiert und durch dessen Luftkühlung an die Atmosphäre abgeführt. Dabei ist die Kühlleistung eines Lüfters des Motorkühlers in der Regel so groß, daß auch bei geringer Umwälzgeschwindigkeit der Kühlflüssigkeit für die Bremsmittel eine ausreichend hohe Kühlungsleistung bereitgestellt wird.

Die in der DE 103 39 211 A1 beschriebene Flüssigkühlung des Bremswiderstands ist in der Praxis jedoch wenig praktikabel. Beim Betrieb des Triebfahrzeuges unter hoher Last, beispielsweise beim Bergauffahren des Triebfahrzeuges, kommt es zu einem Temperaturanstieg der im Motorkühlkreislauf geführten Kühlflüssigkeit. Um die Kühlflüssigkeit des Motorkühlkreislaufs abzukühlen, ist es erforderlich, einen vergleichsweise großen Kühlluftstrom im Motorkühler bereitzustellen. Ist ein kurzzeitiges Abbremsen des Triebfahrzeuges während des Betriebes des Verbrennungsmotors unter hoher Last erforderlich, kann die beim Bremsen freigesetzte Verlustwärme des Bremswiderstandes aufgrund der begrenzten Leistung der Luftkühlung des Motorkühlers nicht ohne weiteres über den Motorkühler an die Atmosphäre abgeführt werden. Dies hat eine Erwärmung der Kühlflüssigkeit im Bremskühlkreislauf zur Folge, was zur thermischen Überlastung und Beschädigung des Bremswidertandes führen kann.

Der Motorkühler ist darüber hinaus auf einen Vollastbetrieb des Triebfahrzeuges ausgelegt. Im Teillast- oder im Leerlaufbetrieb des Triebfahrzeuges kommt es daher sehr schnell zu einer starken Abkühlung des Kühlmittels im Motorkühler, was insbesondere bei wechselnden Teillast- und Vollastbetriebszuständen des Verbrennungsmotors zu einer hohen thermischen Beanspruchung des Verbrennungsmotors führen kann.

Aus der EP 1 270 896 A2 und der US 3,752,132 A sind Bremskühlkreisläufe bekannt, wobei über einen Wärmeüberträger die Verlustwärme der Bremse an einen Sekundärkreislauf übertragen wird.

Aufgabe der vorliegenden Erfindung ist es, das Wärmemanagement zwischen Motorkühlkreislauf und Bremskühlkreislauf zu verbessern, so daß die zuvor geschilderten Probleme nicht oder in verringertem Umfang auftreten können.

Die vorgenannte Aufgabe ist bei einem schienengeführten Triebfahrzeug der eingangs genannten Art durch die Merkmale von Anspruch 1 gelöst. Der Antrieb des erfindungsgemäßen Triebfahrzeuges kann dabei dieselelektrisch oder auch rein elektrisch sein.

Der Erfindung liegt an dieser Stelle der Grundgedanke zugrunde, die zum Abkühlen des in dem Motorkühlkreislauf geführten Kühlmittelstroms zur Verfügung stehende Wärmeübertragungsfläche des Motorkühlers bedarfsweise zu vergrößern oder zu verkleinern, um ein bestimmtes Temperaturniveau des Kühlmittelstroms im Verbrennungsmotor sicher einhalten zu können. Zu diesem Zweck weist das erfindungsgemäße Triebfahrzeug eine entsprechend ausgebildete Steuer- und Regeleinrichtung auf, die in Abhängigkeit von der gemessenen oder ermittelten Kühlmitteltemperatur im Verbrennungsmotor eine mehr oder weniger große Wärmeübertragungsfläche des Motorkühlers zur Abkühlung des aus dem Verbrennungsmotor austretenden heißen bzw. warmen Kühlmittelstroms bereitstellt. Es versteht sich, daß die Größe der beim Kühlen des Kühlmittelstroms überströmten und/oder durchströmten Wärmeübertragungsfläche des Motorkühlers auch in Abhängigkeit vom Lastzustand des Verbrennungsmotors gesteuert bzw. geregelt werden kann, da sich der Lastzustand des Motors direkt auf die Höhe der Kühlmitteltemperatur im Verbrennungsmotor auswirkt.

Bei der Erfindung ist in diesem Zusammenhang weiterhin vorgesehen, die Verlustwärme des Bremswiderstandes vom Bremskühlkreislauf zunächst über einen Wärmeübertrager an einen Sekundärkühlkreislauf und anschließend von dem Sekundärkühlkreislauf an die Umgebung und/oder den Motorkühlkreislauf zu übertragen. Der Sekundärkühlkreislauf ist stofflich vom Bremskühlkreislauf getrennt und energetisch über den Wärmeübertrager mit dem Bremskühlkreislauf gekoppelt. Im Ergebnis wird die Verlustwärme zeitlich verzögert an die Umgebung und/oder den Motorkühlkreislauf abgegeben. Der Sekundärkühlkreislauf stellt einen Wärmespeicher für die Verlustwärme des Bremswiderstandes dar, wobei durch die von dem Sekundärkühlkreislauf aufgenommene Wärmemenge eine Beschädigung oder Überlastung des Bremswiderstandes sicher ausgeschlossen werden kann. Dies ermöglicht es, eine elektrodynamische Bremse auch beim Betrieb des Verbrennungsmotors unter großer Last einzusetzen. Der Bremswiderstand kann dabei eine Leistung zwischen 550 kW und 1200 kW aufweisen.

Überschreitet die Temperatur des Kühlmittels im Verbrennungsmotor einen vorgegebenen oberen Grenzwert, was insbesondere im Vollastbetrieb des Verbrennungsmotors der Fall sein kann, kann die Gesamtwärmeübertragungsfläche des Motorkühlers zur Kühlung des Kühlmittelstroms vorgesehen bzw. genutzt werden. Beispielsweise kann der Motorkühler eine Mehrzahl von Wärmeüberträgern aufweisen, wobei im Vollastbetrieb des Verbrennungsmotors alle Wärmeüberträger zur Kühlung des aus dem Motor austretenden heißen Kühlmittelstroms vorgesehen sein können, was eine entsprechende Leitungsführung für den heißen Kühlmittelstrom aus dem Verbrennungsmotor zum Motorkühler erfordert. Im Teillastbetrieb dagegen kann eine verringerte Anzahl von Wärmeüberträgern zur Abkühlung des Kühlmittelstroms vorgesehen sein, wobei die nicht zur Kühlung vorgesehenen Wärmeüberträger für eine Überströmung und/oder Durchströmung mit dem Kühlmittel aus dem Motorkühlkreislauf gesperrt sind.

Bei Überschreiten einer vorgegebenen (oberen) Grenztemperatur des Kühlmittelstroms im Verbrennungsmotor, vorzugsweise im Vollastbetrieb des Verbrennungsmotors, kann eine größere Wärmeübertragungsfläche des Motorkühlers und bei Unterschreiten einer vorgegebenen (unteren) Grenztemperatur des Kühlmittelstroms im Verbrennungsmotor, vorzugsweise im Teillastbetrieb des Verbrennungsmotors, kann eine kleinere Wärmeübertragungsfläche des Motorkühlers zur Kühlung des heißen bzw. warmen Kühlmittelstroms vorgesehen sein. Auch dies läßt sich in einfacher Weise durch mehrere Wärmeüberträger realisieren, die bedarfsweise für eine Kühlung des Kühlmittelstroms aus dem Motorkühlkreislauf zugeschaltet oder abgeschaltet werden können. In diesem Zusammenhang sollte das Flächenverhältnis der größeren Wärmeübertragungsfläche zur kleineren Wärmeübertragungsfläche wenigstens 60 : 40, vorzugsweise wenigstens 70 : 30, insbesondere ca. 80 : 20, betragen. Damit ist sichergestellt, daß die Temperatur des Kühlmittels im Verbrennungsmotor stets innerhalb der zulässigen Grenztemperaturen liegt und daß es insbesondere im Teillastbetrieb des Verbrennungsmotors nicht zu einer unzulässig starken Abkühlung des Kühlmittelstroms kommt, der in den Verbrennungsmotor zurückgeleitet wird.

Die Größe der für das beim Kühlen des Kühlmittelstroms aus dem Motorkühlkreislauf zur Verfügung stehenden Wärmeübertragungsfläche ist vorzugsweise derart gezielt veränder- bzw. einstellbar, daß die Kühlmitteltemperatur im Verbrennungsmotor in jedem Lastzustand des Verbrennungsmotors größer als 55 °C, vorzugsweise größer als 65°C, und insbesondere kleiner als 105 °C, besonders bevorzugt kleiner als 95 °C ist. Dadurch können Schäden an dem Verbrennungsmotor durch thermische Spannungen weitgehend vermieden werden, auch bei wechselnden Lastzuständen.

Bei den zuvor beschriebenen Ausführungsformen kann die Wärme des heißen bzw. warmen aus dem Verbrennungsmotor austretenden Kühlmittelstroms durch Luftkühlung des Motorkühlers an die Umgebung abgegeben werden.

Weiter vorzugsweise kann vorgesehen sein, daß der Sekundärkühlkreislauf zur Kühlung des weiteren Kühlmittelstroms, der im Sekundärkühlkreislauf umläuft, bedarfsweise an den Motorkühler anschließbar ist. Vorzugsweise läßt sich dadurch die Verlustwärme des Bremswiderstandes über den Motorkühler an die Umgebung abführen, was eine entsprechend dimensionierte Luftkühlung des Motorkühlers erfordert. Der Motorkühler kann in diesem Zusammenhang wenigstens einen Wärmeübertrager aufweisen, der für die Kühlung des weiteren Kühlmittelstroms aus dem Sekundärkühlkreislauf vorgesehen ist. Wird im Motorkühlkreislauf und im Sekundärkühlkreislauf dasselbe Kühlmittel eingesetzt, vorzugsweise Wasser, so ist es grundsätzlich aber auch möglich, daß wenigstens ein Wärmeübertrager bedarfsweise zur Kühlung des im Motorkühlkreislauf geführten Kühlmittelstroms, beispielsweise im Vollastbetrieb des Verbrennungsmotors, vorgesehen ist und daß derselbe Wärmeübertrager beim Bremsen des Schienenfahrzeuges vorgesehen ist, um die Verlustwärme des Bremswiderstandes durch Kühlen des weiteren, im Sekundärkühlkreislauf geführten Kühlmittelstroms an die Umgebung abzugeben. Die gleichen Wärmeübertragungsflächen lassen sich somit bedarfsweise zum Kühlen des Kühlmittels aus dem Motorkühlkreislauf oder aus dem Sekundärkühlkreislauf einsetzen. Es versteht sich, daß zu diesem Zweck eine entsprechend ausgebildete Steuer- und Regelungseinrichtung vorgesehen sein kann.

Zur Herstellung einer Strömungsverbindung zwischen dem Sekundärkühlkreislauf und wenigstens einer Wärmeübertragungsfläche des Motorkühlers, beispielsweise wenigstens eines gesondert schaltbaren Wärmeübertragers des Motorkühlers, der nach Herstellen der Strömungsverbindung von dem im Sekundärkühlkreislauf geführten weiteren Kühlmittelstrom umströmt bzw. durchströmt wird, kann wenigstens eine Umschalteinrichtung vorgesehen sein. Je nach Stellung der Umschalteinrichtung läßt sich beispielsweise wenigstens ein Wärmeübertrager des Motorkühlers in den Sekundärkühlkreislauf oder in den Motorkühlkreislauf einkoppeln bzw. einbinden.

Unterschreitet die Kühlmitteltemperatur im Verbrennungsmotor einen vorgegebenen unteren Grenzwert, was insbesondere im Teillastbetrieb des Verbrennungsmotors der Fall sein kann, kann wenigstens ein Teil der Gesamtwärmeübertragungsfläche des Motorkühlers zur Kühlung des im Sekundärkühlkreislauf umlaufenden weiteren Kühlmittelstroms genutzt werden. Ist eine Vermischung der Kühlmittelströme aus Motorkühlkreislauf einerseits und Sekundärkühlkreislauf andererseits nicht vorgesehen, steht dann die zur Kühlung des im Sekundärkühlkreislauf umlaufenden weiteren Kühlmittelstroms genutzte Wärmeübertragungsfläche des Motorkühlers nicht zur Kühlung des Kühlmittelstroms aus dem Motorkühlkreislauf zur Verfügung. Insoweit ist in diesem Zusammenhang vorzugsweise die Größe der von dem Kühlmittelstrom des Motorkühlers überströmten und/oder durchströmten Wärmeübertragungsfläche des Motorkühlers in Abhängigkeit von der Kühlmitteltemperatur im Verbrennungsmotor bzw. vom Lastzustand des Motors automatisch veränderbar. Im Teillastbetrieb sinkt die maximale Kühlwassertemperatur im Verbrennungsmotor ab, so daß nicht die gesamte Wärmeübertragungsfläche des Motorkühlers für die Kühlung des aus dem Verbrennungsmotor austretenden heißen bzw. warmen Kühlmittelstroms für die Kühlung erforderlich ist. Diese im Teillastbetrieb des Verbrennungsmotors nicht zur Kühlung des im Motorkühlkreislauf umlaufenden Kühlmittelstroms genutzten Wärmeübertragungsflächen des Motorkühlers werden erfindungsgemäß für die Kühlung des im Sekundärkühlkreislauf umlaufenden Kühlmittelstroms und damit insbesondere für eine Wärmeabfuhr der Bremswärme an die Umgebung vorgesehen. Dadurch läßt sich die Baugröße des Motorkühlers gegenüber dem Stand der Technik deutlich verringern und gleichzeitig ein effektives Wärmemanagement zwischen den Kühlkreislaufen sicherstellen.

Im Zusammenhang mit der zuvor beschriebenen Ausführungsform sieht die Erfindung vorzugsweise vor, daß der Motorkühler eine Mehrzahl von Wärmeübertragem aufweist, wobei wenigstens ein Wärmeübertrager unabhängig vom Lastzustand des Verbrennungsmotors an den im Motorkühlkreislauf umlaufenden Kühlmittelstrom angeschlossen ist und daß wenigstens ein weiterer Wärmeübertrager in Abhängigkeit vom Lastzustand des Verbrennungsmotors entweder an den im Motorkühlkreislauf umlaufenden Kühlmittelstrom oder an den im Sekundärkühlkreislauf umlaufenden weiteren Kühlmittelstrom anschließbar ist, was mittels einer entsprechend ausgebildeten Umschalteinrichtung erfolgen kann. Die Umschalteinrichtung wird dabei von einer Steuer- und Regeleinrichtung in Abhängigkeit von der Temperatur des Kühlmittels im Verbrennungsmotor bzw. vom Lastzustand des Verbrennungsmotors gesteuert bzw. geregelt.

Darüber hinaus kann vorgesehen sein, daß bei Unterschreiten einer vorgegebenen Kühlmitteltemperatur im Verbrennungsmotor die vom Sekundärkühlkreislauf aufgenommene Verlustwärme zumindest teilweise vom Sekundärkühlkreislauf an den Motorkühlkreislauf übertragbar ist. Diesem Aspekt der Erfindung kommt eine eigene erfinderische Bedeutung zu. Je nach Temperaturniveau des Kühlmittels im Motorkühlkreislauf kann Wärmeenergie aus dem Sekundärkühlkreislauf an die Umgebung oder an das Kühlmittel im Motorkühlkreislauf übertragen werden. Hierdurch ist es möglich, die Verlustwärme des Bremswiderstandes einzusetzen, um das Kühlmittel im Motorkühlkreislauf warm zu halten. Somit kann die Kühlmitteltemperatur im Motorkühlkreislauf auch im Teillastbetrieb des Triebfahrzeuges durch Ausnutzen der Bremswärme im wesentlichen konstant gehalten werden. Eine konstante Kühlmitteltemperatur wirkt sich unter anderem auch vorteilhaft auf die Menge der beim Fahrbetrieb freigesetzten Emissionen aus.

Vorrichtungsgemäß können der Sekundärkühlkreislauf und der Motorkühlkreislauf zur Wärmeübertragung über wenigstens einen indirekten Wärmeübertrager gekoppelt sein. Grundsätzlich ist es aber auch möglich, daß eine direkte Wärmeübertragung durch zumindest teilweise Vermischung der Kühlmittelströme von Motorkühlkreislauf und Sekundärkühlkreislauf vorgesehen ist.

Die direkte Wärmeübertragung kann auch in Abhängigkeit von der Temperatur des Kühlmittels im Motorkühlkreislauf und/oder von der Temperatur des Kühlmittels im Sekundärkühlkreislauf erfolgen, was eine entsprechend ausgebildete Meß- und Regelungseinrichtung erfordert. Auch ist es möglich, das Kühlmittel aus dem Motorkühlkreislauf nach dessen Abkühlung im Motorkühler in den Sekundärkühlkreislauf einzuspeisen. Hierdurch läßt sich das Temperaturniveau des Kühlmittels im Sekundärkühlkreislauf regulieren.

Als Kühlflüssigkeit kann im Bremskühlkreislauf ein schwer entflammbares Wärmeträgeröl eingesetzt werden. Im Gegensatz zu Wasser weisen Wärmeträgeröle hohe Verdampfungstemperaturen auf. Dies läßt ein höheres Temperaturniveau im Bremskühlkreislauf zu, wobei das Wärmeträgeröl in der flüssigen Phase verbleibt. Der Druck im Bremskühlkreislauf wird somit im wesentlichen durch den Förderdruck einer zum Umwälzen des Wärmeträgeröls vorgesehenen Pumpe bestimmt. Im Ergebnis wird durch die Verwendung von Wärmeträgeröl die konstruktive und sicherheitstechnische Auslegung des Bremskühlkreislaufs vereinfacht und ein guter Wärmeübergang sichergestellt.

Damit es nicht zur Entzündung des Wärmeträgeröles kommt, sollte der Flammpunkt des Wärmeträgeröles zwischen 120 bis 400 °C, insbesondere zwischen 150 bis 320 °C, betragen.

Im Sekundärkühlkreislauf kann als Kühlflüssigkeit Wasser eingesetzt werden. Grundsätzlich ist es natürlich möglich, auch im Sekundärkühlkreislauf ein Wärmeträgeröl umzuwälzen. Um die von dem Bremskühlkreislauf aufgenommene Verlustwärme des Bremswiderstandes an die Umgebung abzuführen, kann der Sekundärkühlkreislauf an wenigsten einen Luftkühler angeschlossen sein. Der Luftkühler kann zu diesem Zweck wenigstens einen Luft-/Flüssigkeitswärmeübertrager und einen entsprechend ausgelegten Lüfter aufweisen. Der Sekundärkühlkreislauf muß dabei nicht zwingend an den Motorkühler angeschlossen sein.

Zur Messung der Temperatur der Kühlflüssigkeit im Bremskühlkreislauf und/oder zur Messung der Temperatur des Kühlmittels im Sekundärkühlkreislauf und/oder im Motorkühlkreislauf können entsprechende Meßeinrichtungen vorgesehen sein. In Abhängigkeit von der gemessenen Temperatur kann dann vorzugsweise automatisch eine Entscheidung getroffen werden, ob die Widerstandsbremse bei einem Bremsvorgang einsetzbar ist oder ob beispielsweise eine vorgesteuerte Druckluftbremse eingesetzt werden muß.

Im übrigen kann eine Steuer- oder Regeleinrichtung zur Steuerung oder Regelung der Temperatur der Kühlflüssigkeit im Bremskühlkreislauf und/oder der Temperatur des Kühlmittels im Sekundärkühlkreislauf und/oder im Motorkühlkreislauf vorgesehen sein. Die Steuerung oder Regelung kann derart erfolgen, daß die Temperatur des Kühlmittels im Motorkühlkreislauf im wesentlichen konstant gehalten wird. Im übrigen kann die Steuerung oder Regelung derart erfolgen, daß die Verdampfungstemperatur und/oder der Flammpunkt der Kühlflüssigkeit und/oder des Kühlmittels nicht überschritten werden. Je nach Temperatur des Kühlmittels im Sekundärkühlkreislauf kann automatisch eine Kühlung über einen in den Sekundärkühlkreislauf eingebundenen Luftkühler und/oder über den Motorkühler erfolgen. Sofern eine direkte Wärmeübertragung durch (Teil-)Einspeisung von Kühlmittel aus dem Sekundärkühlkreislauf in den Motorkühlkreislauf oder umgekehrt vorgesehen ist, kann die Steuerung und Regelung die Festlegung des eingespeisten Kühlmittel-Volumenstroms betreffen.

Im übrigen kann in dem Bremskühlkreislauf wenigstens ein Speicherbehälter für die Kühlflüssigkeit vorgesehen sein, der als Wärmespeicher dient, was insbesondere bei kurz andauernden Bremsvorgängen von Vorteil ist.

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung. In der Zeichnung zeigen
- Fig. 1: eine schematische Darstellung eines Beispiels eines Triebfahrzeuges,
- Fig.2: eine schematische Darstellung eines Ausführungsbeispiels eines Triebfahrzeuges im Vollastbetrieb des Triebfahrzeuges und
- Fig. 3: das in Fig. 2 dargestellte Ausführungsbeispiel im Teillastbetrieb des Triebfahrzeuges.

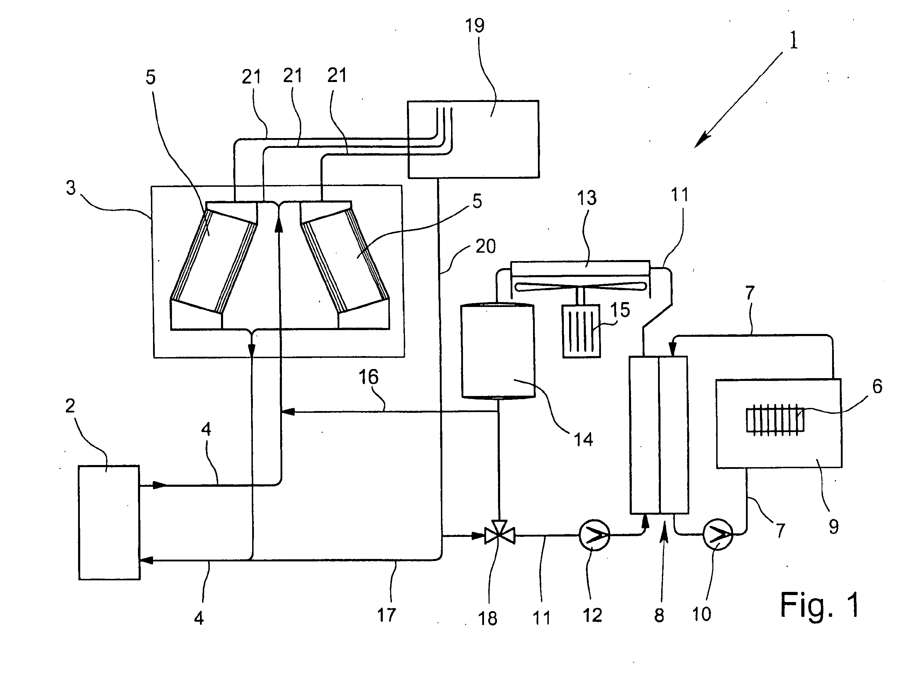

Figur 1 der Zeichnung zeigt ein Beispiel eines Triebfahrzeugs 1 in schematischer Darstellung. Bei dem Triebfahrzeug 1 kann es sich um eine Lokomotive mit mittig angeordnetem Führerhaus, insbesondere eine Plattformlokomotive, handeln. Zum Erzeugen einer Antriebsbewegung ist ein schematisch dargestellter Verbrennungsmotor 2 vorgesehen, bei dem es sich um einen Dieselmotor handelt, dessen Antriebsbewegung über eine Antriebswelle in einen Generator eingeleitet wird. Der Generator erzeugt nach entsprechender Umwandlung eine Antriebswechselspannung, die zum Antrieb eines Elektromotors vorgesehen ist, wobei der Elektromotor über eine Antriebswelle mit einem Rad des durch die Schiene geführten Triebfahrzeugs verbunden ist.

Zum Kühlen des Verbrennungsmotors 2 ist ein an einen Motorkühler 3 angeschlossener Motorkühlkreislauf 4 vorgesehen. Der Motorkühler 3 weist zwei Kühleinrichtungen 5 auf, bei denen es sich um Luft-/Flüssigkeitswärmeaustauscher handeln kann. Zur Wärmeabfuhr an die Umgebung ist ein nicht dargestellter Lüfter vorgesehen, der einen ausreichend großen Luftstrom für den Motorkühler 3 bereitstellt.

Der Motorkühlkreislauf 4 wird durch ein Rohrleitungssystem gebildet, in dem Kühlwasser umgewälzt wird. Es versteht sich, daß entsprechende Pumpen zum Umwälzen der Kühlflüssigkeit in dem Motorkühlkreislauf 4 vorgesehen sind. Dabei umströmt die Motorkühlflüssigkeit den Verbrennungsmotor 2, nimmt die bei der Brennstoffverbrennung entstehende Wärme auf und führt diese dem Motorkühler 3 zu. Der Motorkühler 3 kann zweckmäßigerweise so in dem Triebfahrzeug 1 angeordnet sein, daß Fahrtwind in den Motorkühler 3 einleitbar ist. Der Lüfter des Motorkühlers 3 kann insbesondere bei langsamer Fahrt des Triebfahrzeugs 1 einen zur Kühlung ausreichend großen Luftstrom bereitstellen. Der Motorkühler 3 kann auch nur durch den Lüfter gekühlt werden.

Nicht dargestellt ist, daß das im Motorkühlkreislauf 4 geführte Kühlwasser nach der Erwärmung im Verbrennungsmotor 2 auch zur Fahrerraumbeheizung eingesetzt werden kann.

Das Triebfahrzeug 1 wird elektrisch abgebremst. Hierbei wirkt der Elektromotor als Generator, der die in diesen über die Antriebswelle eingeleitete Bewegungsenergie in elektrische Energie umwandelt und diese an einen Wechselrichter überträgt. Der Wechselrichter richtet die vom Elektromotor erzeugte Wechselspannung gleich und stellt sie einem Bremswiderstand 6 zur Verfügung, in dem die elektrische Bremsenergie in Wärmeenergie oder mit anderen Worten in Verlustwärme umgewandelt wird.

Die Verlustwärme des Bremswiderstandes 6 wird über einen Bremskühlkreislauf 7 abgeführt. Der Bremskühlkreislauf 7 umfaßt ein flüssigkeitsbefülltes Rohrleistungssystem, einen Bremskühlkreislauf-Wärmeaustauscher 8 sowie ein Bremswiderstandsgefäß 9. Bei dem Bremskühlkreislauf-Wärmeaustauscher 8 handelt es sich um einen indirekten Wärmeübertrager. In dem Bremskühlkreislauf 7 wird ein schwer entflammbares Wärmeträgeröl geführt, das mit einer Umwälzpumpe 10 umgewälzt wird.

In dem mit dem Wärmeträgeröl gefüllten Bremswiderstandsgefäß 9 befindet sich der Bremswiderstand 6. Der Innenraum des Bremswiderstandsgefäßes 9 nimmt ca. 150 Liter des Wärmeträgeröls auf, wobei der Flammpunkt des Wärmeträgeröls vorzugsweise zwischen 156 °C und 320 °C beträgt.

Die Umwälzpumpe 10 fördert das von dem Bremswiderstand 6 erwärmte Wärmeträgeröl aus dem Bremswiderstandsgefäß 9 über den Bremskühlkreislauf-Wärmeaustauscher 8 in das Bremswiderstandsgefäß 9 zurück. Die dabei von dem Wärmeträgeröl aufgenommene Verlustwärme des Bremswiderstands 6 wird über den Bremskühlkreislauf-Wärmeaustauscher 8 an einen Sekundärkühlkreislauf 11 übertragen. In dem Sekundärkühlkreislauf 11 ist ebenfalls eine Kühlflüssigkeit geführt, wobei es sich bei der Kühlflüssigkeit vorzugsweise um Wasser handelt. Nicht dargestellte Meßeinrichtungen und eine ebenfalls nicht dargestellte Steuer- und/oder Regeleinrichtung messen bzw. überwachen die zulässigen Grenzwerte der Temperaturen der in den Kühlkreisläufen 7, 11 geführten flüssigen Medien.

Eine weitere Umwälzpumpe 12 fördert das in dem Sekundärkühlkreislauf 11 geführte flüssige Kühlmittel aus dem Bremskreislauf-Wärmeaustauscher 8 über einen belüfteten Wabenkühler 13 und einen Pufferspeicher 14 zurück. Zur Kühlung des Wabenkühlers 13 ist ein Lüfter 15 vorgesehen. Der Wabenkühler 13 und der Lüfter 15 bilden einen Luftkühler, der zur Abgabe der von dem Sekundärkühlkreislauf 11 aufgenommenen Verlustwärme des Bremswiderstandes 6 an die Umgebung vorgesehen ist.

Über eine Zulaufleitung 16 ist es alternativ oder ergänzend zum Luftkühler des Sekundärkreislaufs möglich, das im Sekundärkühlkreislauf 11 geführte Kühlwasser dem Motorkühler 3 zuzuführen und nach Abkühlung im Motorkühler 3 über die Rücklaufleitung 17 und ein Umschaltventil 18 in den Sekundärkühlkreislauf 11 zurückzuspeisen. Bei ausreichend großer Temperaturdifferenz zwischen dem im Sekundärkühlkreislauf 11 geführten Kühlwasser einerseits und den im Motorkühlkreislauf 4 geführten Kühlwasser andererseits kommt es dann im Motorkühler 3 zur Wärmeübertragung von dem Sekundärkühlkreislauf 11 auf den Motorkühlkreislauf 4, wobei die Triebkraft des Wärmeübergangs die Temperaturdifferenz des in den beiden Kühlkreisläufen geführten Kühlwassers ist. Die Übertragung von Wärmeenergie von dem Sekundärkühlkreislauf 11 auf den Motorkühlkreislauf 4 erfolgt dann, wenn das im Motorkühlkreislauf 4 geführte Kühlwasser eine vorgegebene Grenztemperatur unterschreitet. Grundsätzlich kann die Wärme aus dem Sekundärkühlkreislauf 11 jedoch auch über den Motorkühler 3 an die Umgebung abgegeben werden.

In der Figur 1 ist nicht im einzelnen dargestellt, daß der Sekundärkühlkreislauf 11 und der Motorkühlkreislauf 4 durch zwei voneinander getrennte und an den Motorkühler 3 angeschlossene Rohrleitungssysteme gebildet werden. Es findet somit vorzugsweise keine Vermischung der Kühlwasserströme aus dem Sekundärkühlkreislauf 11 und dem Motorkühlkreislauf 4 statt. Nicht im einzelnen dargestellt ist, daß der Motorkühler 3 zu diesem Zweck wenigsten einen lediglich in den Sekundärkühlkreislauf 11 eingebundenen Sekundärkühlkreislauf-Wärmeaustauscher und wenigstens einen in den Motorkühlkreislauf 4 eingebundenen Motorkühlkreislauf-Wärmeaustauscher aufweist.

Auch ist es möglich, daß eine direkte Wärmeübertragung zwischen dem Sekundärkühlkreislauf 11 und dem Motorkühlkreislauf 4 vorgesehen wird, wobei Kühlwasser über die Zulaufleitung 16 in den Motorkühlkreislauf 4 eingespeist und über die Rücklaufleitung 17 aus dem Motorkühlkreislauf 4 in den Sekundärkühlkreislauf 11 zurückgespeist werden kann. Zur Steuerung der Volumenströme sind dann entsprechende Ventile vorzusehen.

Darüber hinaus weist das Triebfahrzeug 1 nicht dargestellte Meßeinrichtungen zur Messung der Temperatur des Kühlmittels im Bremskühlkreislauf 7 und/oder im Sekundärkühlkreislauf 11 und/oder im Motorkühlkreislauf 4 auf, um die zulässigen thermischen Grenzwerte der Kühlmedien überwachen zu können. Die Überwachung der thermischen und auch der elektrischen Grenzwerte geschieht kontinuierlich durch eine Bremssteuereinrichtung, die ebenfalls nicht dargestellt ist. Dabei wird die Verfügbarkeit der elektrischen Bremse dem Lokomotivführer durch Leuchtmelder angezeigt. Bei Störungen oder Grenzwertüberschreitungen wird die elektrodynamische Bremse abgeschaltet und eine vorgesteuerte Druckluftbremse wird wirksam.

Zum Ausgleich von (Verdampfungs-)Verlusten ist ein Kühlwasserausgleichbehälter 19 vorgesehen. Über eine Ausgleichleitung 20 läßt sich vom Kühlwasserausgleichbehälter 19 Kühlwasser in den Sekundärkühlkreislauf 11 und/oder in den Motorkühlkreislauf 4 einspeisen. Schließlich weist der Motorkühler 3 eine Mehrzahl von Entlüftungsleitungen 21 auf.

Durch die große thermische Zeitkonstante des Kühlsystems sind bei dem dargestellten Triebfahrzeug 1 geringe Lüfterleistungen des Motorkühlers 3 erforderlich, was zu geringeren Lärmemissionen führt. Durch das dargestellte Brems- und Kühlsystem des Triebfahrzeuges 1 läßt sich eine thermische Überlastung und Beschädigung des Bremswiderstandes 6 bei hoher Wirtschaftlichkeit des Fahrzeugbetriebes ausschließen.

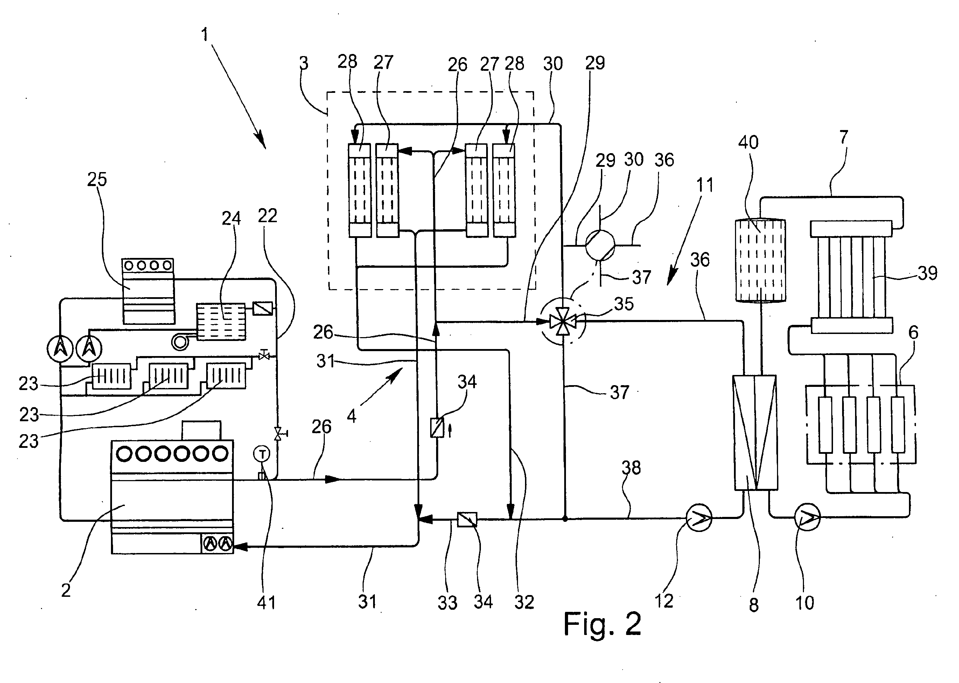

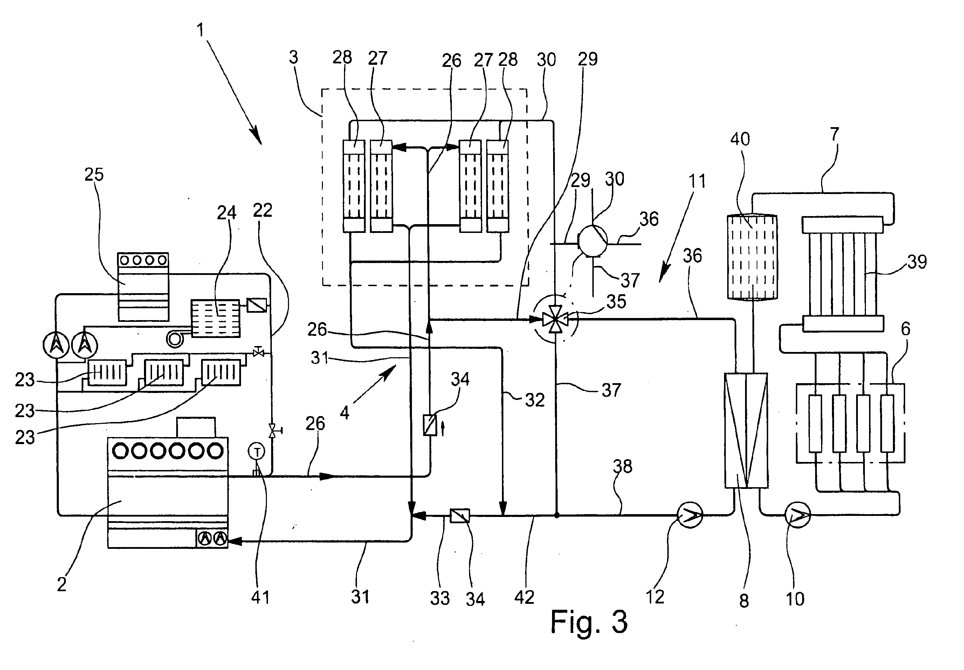

In den Fig. 2 und 3 ist eine Ausführungsform eines erfindungsgemäßen Triebfahrzeuges 1 dargestellt, wobei Fig. 2 das Wärmemanagement des Triebfahrzeuges 1 im Vollastbetrieb und Fig. 3 das Wärmemanagement im Teillastbetrieb zeigt. Der Teillastbetrieb des Triebfahrzeuges 1 im Sinne der Erfindung umfaßt alle Betriebszustände, bei dem das Triebfahrzeug 1 nicht mit Vollast betrieben wird und folglich auch einen Leerlaufbetrieb. Durch die Steuerung des Triebfahrzeuges 1 ist es im übrigen vorzugsweise so, daß beim Bremsen des Triebfahrzeuges 1 automatisch der Verbrennungsmotor 2 vom Vollast- in den Teillastbetrieb wechselt. Das Triebfahrzeug 1 weist einen Verbrennungsmotor 2, einen an einen Motorkühler 3 angeschlossenen Motorkühlkreislauf 4 zum Kühlen des Verbrennungsmotors 2 und Bremsmittel zum Abbremsen des Triebfahrzeuges auf, wobei in dem Motorkühlkreislauf 4 ein Kühlmittelstrom im Kreislauf geführt wird, wobei die Bremsmittel wenigstens eine elektrische Widerstandsbremse mit einem vierteiligen Bremswiderstand 6 aufweisen und wobei ein eine Kühlflüssigkeit führenden Bremskühlkreislauf 7 zum Kühlen des Bremswiderstandes 6 vorgesehen ist.

Bei Betrieb des Verbrennungsmotors 2 tritt ein heißer bzw. warmer Kühlmittelstrom aus dem Verbrennungsmotor 2 aus, der zum Teil über eine Kühlmittelleitung 22 Führerraumheizungen 23, einem Vorwärmgerät 24 und einem Hilfsaggregat 25 zugeleitet werden kann. Der verbleibende Anteil des heißen Kühlmittelstroms wird über eine Kühlmittelleitung 26 dem Motorkühler 3 zugeführt. Der Motorkühler 3 weist zwei Teillastkühler 27 und zwei Brems- und Vollastkühler 28 auf. Im Vollastbetrieb wird ein Teil des heißen Kühlmittelstroms aus dem Verbrennungsmotor 2 über Kühlmittelleitungen 29, 30 abgetrennt und den Brems- und Vollastkühlern 28 zugeführt. Der verbleibende Rest des heißen Kühlmittelstroms wird über die Kühlmittelleitung 26 den beiden Teillastkühlern 27 zugeführt. Das Verhältnis der Wärmeübertragungsflächen der Brems- und Vollastkühler 28 zu den Teillastkühlern 27 beträgt ca. 80 : 20. Im Ergebnis wird im Vollastbetrieb die Gesamtwärmeübertragungsfläche des Motorkühlers 3 zur Kühlung des heißen Kühlmittelstroms aus dem Verbrennungsmotor 2 genutzt. Nach dem Kühlen wird das aus den Teillastkühlern 27 austretende abgekühlte Kühlmittel über eine Rücklaufleitung 31 in den Verbrennungsmotor 2 zurückgeführt. Das aus den Brems- und Vollastkühlern 28 austretende abgekühlte Kühlmittel wird über Rücklaufleitungen 32, 33 in die Rücklaufleitung 31 eingespeist und ebenfalls zum Verbrennungsmotor 2 zurückgeführt. Um die zuvor beschriebene Strömungsführung sicherzustellen, sind Rückschlagklappen 34 in den Rücklaufleitungen 31, 33 vorgesehen. Im übrigen ist eine Umschalteinrichtung 35 vorgesehen, die im Vollastzustand des Verbrennungsmotors 1 eine Strömungsverbindung zwischen der Kühlmittelleitung 29 und der Kühlmittelleitung 30 herstellt. Bei der Umschalteinrichtung 35 kann es sich um eine Wechselventileinheit handeln.

Wie sich weiter aus Fig. 2 ergibt, ist ein einen weiteren Kühlmittelstrom führender Sekundärkühlkreislauf 11 vorgesehen, wobei der weitere Kühlmittelstrom in den Kühlmittelleitungen 36, 37, 38 über einen Bremskühlkreislauf-Wärmeaustauscher 8 an einen Bremskühlkreislauf 7 angeschlossen ist. Dadurch ist es möglich, die beim Bremsen entstehende Verlustwärme des Bremswiderstandes 6 über den Bremskühlkreislauf-Wärmeaustauscher 8 an den Sekundärkühlkreislauf 11 zu übertragen. Im Bremskühlkreislauf 7 ist eine Umwälzpumpe 10 und im Sekundärkühlkreislauf 11 eine Umwälzpumpe 12 vorgesehen. Darüber hinaus weist der Bremskühlkreislauf 7 einen statischen Rohrkühler 39 auf, der zur Absenkung der Temperatur der in dem Bremskühlkreislauf 7 geführten Kühlflüssigkeit durch Fahrtwind führt. Im übrigen ist ein Speicherbehälter 40 für die Kühlflüssigkeit vorgesehen, der als Wärmespeicher dient. Ein entsprechender Wärmespeicher kann auch im Sekundärkühlkreislauf 11 vorgesehen sein, so wie dies in Fig. 1 dargestellt ist.

Bei Vollastbetrieb ist nun vorgesehen, daß der Sekundärkühlkreislauf 11 nicht an den Motorkühler 3 angeschlossen ist, was durch eine entsprechende Stellung der Umschalteinrichtung 35 bewirkt wird. Im übrigen ist die Umwälzpumpe 12 bei Vollastbetrieb des Verbrennungsmotors 2 ausgeschaltet. Eine Vermischung der Kühlmittelströme aus dem Motorkühlkreislauf 4 und dem Sekundärkühlkreislauf 11 ist nicht vorgesehen.

Bei der in den Fig. 2 und 3 dargestellten Ausführungsform ist es weiter vorgesehen, daß die Brems- und Vollastkühler 28 lediglich im Vollastbetrieb zur Kühlung des im Motorkühlkreislauf 4 geführten Kühlmittelstroms vorgesehen sind. Die Gesamtwärmeübertragungsfläche des Motorkühlers 3 läßt sich also in Abhängigkeit von der Temperatur des Kühlmittels im Verbrennungsmotor 2 bzw. vom Lastzustand steuern bzw. regeln, wobei eine Meßeinrichtung zur Messung der Kühlmitteltemperatur und eine Steuer- und Regelungseinrichtung vorgesehen sein können und wobei die Steuer- und Regelungseinrichtung in Abhängigkeit von der gemessenen Kühlmitteltemperatur die Umschalteinrichtung 35 steuert bzw. regelt. Zur Messung der Kühlmitteltemperatur im Verbrennungsmotor 2 kann eine Temperaturmeßstelle 41 vorgesehen sein, die die Kühlmitteltemperatur unmittelbar am Austritt aus dem Verbrennungsmotor 2 mißt.

In Fig. 3 ist das Triebfahrzeug 1 im Teillastbetrieb dargestellt, wobei im Teillastbetrieb die beiden äußeren Brems- und Vollastkühler 28 nicht von dem heißen bzw. warmen Kühlmittelstrom aus dem Verbrennungsmotor 2 durchströmt werden. Der heiße Kühlmittelstrom wird über die Kühlmittelleitung 26 den Teillastkühlern 27 zugeführt und dort abgekühlt. Die Brems- und Vollastkühler 28 dagegen werden nicht durchströmt. Dadurch ist sichergestellt, daß es im Teillastbetrieb des Triebfahrzeuges 1 nicht zu einer Abkühlung des Kühlmittelstroms vor dem Eintritt in den Verbrennungsmotor 2 unterhalb von 55°C bis 65°C kommen kann. Nach dem Durchströmen der Teillastkühler 27 gelangt der abgekühlte Kühlmittelstrom über die Rücklaufleitung 31 wieder in den Verbrennungsmotor 2.

Im Teillastbetrieb sind die Kühlmittelleitungen 29, 37 aufgrund der Stellung der Umschalteinrichtung 35 gesperrt, was schematisch in Fig. 3 dargestellt ist. Statt dessen ist im Teillastbetrieb die Umschalteinrichtung 35 derart geschaltet, daß eine Strömungsverbindung zwischen der Kühlmittelleitung 36 und der Kühlmittelleitung 30 freigegeben wird. Beim Bremsen des Triebfahrzeuges 1 werden die Umwälzpumpe 12 und die Umwälzpumpe 10 eingeschaltet, was dazu führt, daß der im Sekundärkühlkreislauf 11 umlaufende Kühlmittelstrom über die Kühlmittelleitung 30 zu den beiden äußeren Brems- und Vollastkühlern 28 geleitet wird, diese durchströmt und dabei abgekühlt wird. Der abgekühlte weitere Kühlmittelstrom gelangt über die Kühlmittelleitung 32 aus den Brems- und Vollastkühlern 28 zu einer Rücklaufleitung 42 und von dort in die Leitung 38. Eine Rückströmung des weiteren Kühlmittelstroms über die Kühlmittelleitung 33 in die Rücklaufleitung 31 und damit eine Vermischung der Kühlmittelströme findet bei eingeschalteter Umwälzpumpe 12 nicht statt.

Bei einem Teillastbetrieb des Verbrennungsmotors 2, in dem das Triebfahrzeug 1 nicht abgebremst wird, ist die Umwälzpumpe 12 vorzugsweise ausgeschaltet, wobei beim Nicht-Bremsen des Triebsfahrzeuges 1 auch die Strömungsverbindung zwischen den Kühlmittelleitungen 30, 36 nicht zwingend hergestellt sein muß. Wesentlich ist, daß diese Strömungsverbindung besteht, wenn das Triebfahrzeug 1 abgebremst und Verlustwärme des Bremswiderstandes 6 über die Brems- und Vollastkühler 28 an die Umgebung abgeführt werden soll. Beim Bremsen des Triebfahrzeuges 1 wird der Sekundärkühlkreislauf 11 durch den in den Kühlmittelleitungen 30, 32, 36, 38 und 42 umlaufenden und durch die äußeren Brems- und Vollastkühler 28 hindurchgeführten weiteren Kühlmittelstrom gebildet.

Es wird darauf hingewiesen, daß die in den Patentansprüchen formulierten Aspekte der Erfindung bedarfsweise beliebig miteinander kombiniert werden können, ohne daß dies im einzelnen beschrieben worden ist.

## Patentansprüche

1. Schienengeführtes Triebfahrzeug (1), mit einem Verbrennungsmotor (2), einem an einen Motorkühler (3) angeschlossenen Motorkühlkreislauf (4) zum Kühlen des Verbrennungsmotors (2) und Bremsmitteln zum Abbremsen des Triebfahrzeugs, wobei in dem Motorkühlkreislauf (4) ein flüssiger Kühlmittelstrom im Kreislauf geführt wird, wobei die Bremsmittel wenigstens eine elektrische Widerstandsbremse mit wenigstens einem Bremswiderstand (6) aufweisen und wobei ein eine Kühlflüssigkeit führender Bremskühlkreislauf (7) zum Kühlen des Bremswiderstandes (6) vorgesehen ist, **dadurch gekennzeichnet, daß** ein einen weiteren flüssigen Kühlmittelstrom führender Sekundärkühlkreislauf (11) vorgesehen ist und daß der Sekundärkühlkreislauf (11) und der Bremskühlkreislauf (7) an wenigstens einen Bremskühlkreislauf-Wärmeübertrager (8) angeschlossen sind, wobei Verlustwärme des Bremswiderstandes (6) von dem Bremskühlkreislauf (7) aufgenommen wird und über den Bremskühlkreislauf-Wärmeübertrager (8) an den Sekundärkühlkreislauf (11) übertragbar ist, und daß die Größe der von dem flüssigen Kühlmittelstrom beim Kühlen überströmten und/oder durchströmten Wärmeübertragungsfläche des Motorkühlers (3) in Abhängigkeit von der Kühlmitteltemperatur im Verbrennungsmotor (2) automatisch steuer- bzw. regelbar ist, wobei der Motorkühler (3) eine Mehrzahl von Wärmeübertragern (27, 28) aufweist, wobei wenigstens ein Wärmeübertrager (27) unabhängig vom Lastzustand des Verbrennungsmotors (2) an den im Motorkühlkreislauf (4) umlaufenden Kühlmittelstrom angeschlossen ist und wobei wenigstens ein weiterer Wärmeübertrager (28) in Abhängigkeit vom Lastzustand an den im Motorkühlkreislauf (4) umlaufenden Kühlmittelstrom oder an den im Sekundärkühlkreislauf (11) umlaufenden weiteren Kühlmittelstrom anschließbar ist.

2. Triebfahrzeug nach Anspruch 1, **dadurch gekennzeichnet, daß** bei Überschreiten einer vorgegebenen Grenztemperatur des Kühlmittelstroms im Verbrennungsmotor (2), vorzugsweise im Vollastbetrieb des Verbrennungsmotors (2), die Gesamtwärmeübertragungsfläche des Motorkühlers (3) zur Kühlung des Kühlmittelstroms vorgesehen ist.

3. Triebfahrzeug nach Anspruch 1 oder 2, **dadurch gekennzeichnet, daß** bei Überschreiten einer vorgegebenen Grenztemperatur des Kühlmittelstroms im Verbrennungsmotor (2), vorzugsweise im Vollastbetrieb des Verbrennungsmotors, eine größere Wärmeübertragungsfläche des Motorkühlers (3) und bei Unterschreiten einer vorgegebenen Grenztemperatur des Kühlmittelstroms im Verbrennungsmotor (2), vorzugsweise im Teillastbetrieb des Verbrennungsmotors (2), eine kleinere Wärmeübertragungsfläche des Motorkühlers (3) zur Kühlung des Kühlmittelstroms vorgesehen ist.

4. Triebfahrzeug nach Anspruch 3, **dadurch gekennzeichnet, daß** das Flächenverhältnis der größeren Wärmeübertragungsfläche zur kleineren Wärmeübertragungsfläche wenigstens 60 : 40, vorzugsweise wenigstens 70 : 30, insbesondere ca. 80 : 20, beträgt.

5. Triebfahrzeug nach einem der vorhergehenden Ansprüche, **dadurch gekennzeichnet, daß** die Größe der Wärmeübertragungsfläche beim Kühlen des Kühlmittelstroms derart steuer- bzw. regelbar ist, daß die Kühlmitteltemperatur im Verbrennungsmotor (2) in jedem Lastzustand des Verbrennungsmotors (2) größer als 55 °C, vorzugsweise größer als 65 °C, und kleiner als 105 °C, besonders bevorzugt kleiner als 95 °C, ist.

6. Triebfahrzeug nach einem der vorhergehenden Ansprüche, **dadurch gekennzeichnet, daß** der Sekundärkühlkreislauf (11) zur Kühlung des weiteren Kühlmittelstroms bedarfsweise an den Motorkühler (3) anschließbar ist.

7. Triebfahrzeug nach einem der vorhergehenden Ansprüche, **dadurch gekennzeichnet, daß** wenigstens eine Umschalteinrichtung (35) zur Herstellung einer Strömungsverbindung zwischen dem Sekundärkühlkreislauf (11) und wenigstens einer Wärmeübertragungsfläche des Motorkühlers (3) vorgesehen ist.

8. Triebfahrzeug nach einem der vorhergehenden Ansprüche, **dadurch gekennzeichnet, daß** wenigstens ein Teil der Gesamtwärmeübertragungsfläche des Motorkühlers (3) bei Unterschreiten einer vorgegebenen Grenztemperatur des Kühlmittelstroms im Verbrennungsmotor (2), vorzugsweise im Teillastbetrieb des Verbrennungsmotors (2), zur Kühlung des im Sekundärkühlkreislauf (11) umlaufenden weiteren Kühlmittelstroms vorgesehen ist.

9. Triebfahrzeug nach Anspruch 8, **dadurch gekennzeichnet, daß** die bei Unterschreiten einer vorgegebenen Grenztemperatur des Kühlmittelstroms im Verbrennungsmotor (2), vorzugsweise im Teillastbetrieb des Verbrennungsmotors (2), nicht zur Kühlung des im Motorkühlkreislauf (4) umlaufenden Kühlmittelstroms vorgesehene Wärmeübertragungsfläche des Motorkühlers (3) vorzugsweise vollständig zur Kühlung des im Sekundärkühlkreislauf (11) umlaufenden weiteren Kühlmittelstroms vorgesehen ist.

10. Triebfahrzeug nach einem der vorhergehenden Ansprüche, **dadurch gekennzeichnet, daß** im Motorkühlkreislauf (4) und im Sekundärkühlkreislauf (11) dasselbe Kühlmittel, vorzugsweise Wasser, umläuft.

11. Triebfahrzeug nach einem der vorhergehenden Ansprüche, **dadurch gekennzeichnet, daß** bei Unterschreiten einer vorgegebenen Kühlmitteltemperatur im Verbrennungsmotor (2) die vom Sekundärkühlkreislauf (11) aufgenommene Verlustwärme zumindest teilweise vom Sekundärkühlkreislauf (11) an den Motorkühlkreislauf (4) übertragbar ist.

12. Triebfahrzeug nach einem der vorhergehenden Ansprüche, **dadurch gekennzeichnet, daß** der Sekundärkühlkreislauf (11) und der Motorkühlkreislauf (4) zur Wärmeübertragung über wenigstens einen indirekten Wärmeübertrager koppelbar sind und/oder das eine direkte Wärmeübertragung durch zumindest teilweise Vermischung der Kühlmittelströme von Motorkühlkreislauf (4) und Sekundärkühlkreislauf (11) vorgesehen ist.

13. Triebfahrzeug nach einem der vorhergehenden Ansprüche, **dadurch gekennzeichnet, daß** der Sekundärkühlkreislauf (11) wenigstens einen Wärmeübertrager (13) zur Wärmeabgabe an die Umgebung aufweist.

14. Triebfahrzeug nach einem der vorhergehenden Ansprüche, **dadurch gekennzeichnet, daß** wenigstens eine Meßeinrichtung zur Messung der Temperatur der Kühlflüssigkeit im Bremskühlkreislauf (7) und/oder zur Messung der Temperatur des Kühlmittels im Sekundärkühlkreislauf (11) und/oder im Motorkühlkreislauf (4) vorgesehen ist.

15. Triebfahrzeug nach einem der vorhergehenden Ansprüche, **dadurch gekennzeichnet, daß** der Bremskühlkreislauf (7) wenigstens einen Speicherbehälter (40) für die Kühlflüssigkeit aufweist.

## Claims

1. Rail-guided traction vehicle (1), comprising an internal combustion engine (2), an engine cooling circuit (4) connected to a radiator (3) for cooling the internal combustion engine (2), and braking means for braking the traction vehicle, wherein a liquid coolant stream is circulated in the engine cooling circuit (4), wherein the braking means comprise at least one electric dynamic brake with at least one braking resistor (6), and wherein a brake cooling circuit (7) carrying a cooling fluid is provided for cooling the braking resistor (6), **characterised in that** a secondary cooling circuit (11) which carries a further liquid coolant stream is provided, and **in that** the secondary cooling circuit (11) and the brake cooling circuit (7) are connected to at least one brake cooling circuit heat exchanger (8), wherein lost heat from the braking resistor (6) is picked up by the brake cooling circuit (7) and can be transferred via the brake cooling circuit heat exchanger (8) to the secondary cooling circuit (11), and **in that** the size of the heat transfer area of the radiator (3) over and/or through which the liquid coolant stream passes during cooling can be controlled or adjusted automatically as a function of the coolant temperature in the internal combustion engine (2), wherein the radiator (3) has a plurality of heat exchangers (27, 28), wherein at least one heat exchanger (27) is connected regardless of the load state of the internal combustion engine (2) to the coolant stream circulating in the engine cooling circuit (4), and wherein at least one further heat exchanger (28) can be connected as a function of the load state to the coolant stream circulating in the engine cooling circuit (4) or to the further coolant stream circulating in the secondary cooling circuit (11).

2. Traction vehicle according to claim 1, **characterised in that**, when a predefined limit temperature of the coolant stream in the internal combustion engine (2) is exceeded, preferably during full-load operation of the internal combustion engine (2), the total heat transfer area of the radiator (3) is provided for cooling the coolant stream.

3. Traction vehicle according to claim 1 or 2, **characterised in that**, when a predefined limit temperature of the coolant stream in the internal combustion engine (2) is exceeded, preferably during full-load operation of the internal combustion engine, a larger heat transfer area of the radiator (3) is provided for cooling the coolant stream and, when a predefined limit temperature of the coolant stream in the internal combustion engine (2) is not reached, preferably during part-load operation of the internal combustion engine (2), a smaller heat transfer area of the radiator (3) is provided for cooling the coolant stream.

4. Traction vehicle according to claim 3, **characterised in that** the area ratio of the larger heat transfer area to the smaller heat transfer area is at least 60 : 40, preferably at least 70 : 30, in particular approximately 80 : 20.

5. Traction vehicle according to one of the preceding claims, **characterised in that** the size of the heat transfer area when cooling the coolant stream can be controlled or adjusted in such a way that the coolant temperature in the internal combustion engine (2) in any load state of the internal combustion engine (2) is greater than 55°C, preferably greater than 65°C, and less than 105°C, particularly preferably less than 95°C.

6. Traction vehicle according to one of the preceding claims, **characterised in that** the secondary cooling circuit (11) for cooling the further coolant stream can be connected to the radiator (3) as required.

7. Traction vehicle according to one of the preceding claims, **characterised in that** at least one switchover device (35) is provided for establishing a flow connection between the secondary cooling circuit (11) and at least one heat transfer area of the radiator (3).

8. Traction vehicle according to one of the preceding claims, **characterised in that**, when a predefined limit temperature of the coolant stream in the internal combustion engine (2) is not reached, preferably during part-load operation of the internal combustion engine (2), at least part of the total heat transfer area of the radiator (3) is provided for cooling the further coolant stream circulating in the secondary cooling circuit (11).

9. Traction vehicle according to claim 8, **characterised in that** the heat transfer area of the radiator (3) which is not provided for cooling the coolant stream circulating in the engine cooling circuit (4) when a predefined limit temperature of the coolant stream in the internal combustion engine (2) is not reached, preferably during part-load operation of the internal combustion engine (2), is preferably provided entirely for cooling the further coolant stream circulating in the secondary cooling circuit (11).

10. Traction vehicle according to one of the preceding claims, **characterised in that** the same coolant, preferably water, circulates in the engine cooling circuit (4) and in the secondary cooling circuit (11).

11. Traction vehicle according to one of the preceding claims, **characterised in that**, when a predefined coolant temperature in the internal combustion engine (2) is not reached, the lost heat picked up by the secondary cooling circuit (11) can be transferred at least partially from the secondary cooling circuit (11) to the engine cooling circuit (4).

12. Traction vehicle according to one of the preceding claims, **characterised in that** the secondary cooling circuit (11) and the engine cooling circuit (4) can be coupled for heat transfer purposes via at least one indirect heat exchanger and/or in that a direct heat transfer is provided by at least partially mixing the coolant streams of the engine cooling circuit (4) and the secondary cooling circuit (11),

13. Traction vehicle according to one of the preceding claims, **characterised in that** the secondary cooling circuit (11) has at least one heat exchanger (13) for dissipating heat to the surrounding environment.

14. Traction vehicle according to one of the preceding claims, **characterised in that** at least one measuring device is provided for measuring the temperature of the cooling fluid in the brake cooling circuit (7) and/or for measuring the temperature of the coolant in the secondary cooling circuit (11) and/or in the engine cooling circuit (4).

15. Traction vehicle according to one of the preceding claims, **characterised in that** the brake cooling circuit (7) has at least one storage tank (40) for the cooling fluid.

## Revendications

1. Véhicule de traction sur rails (1), comportant un moteur à combustion interne (2), un circuit de refroidissement du moteur (4), raccordé à un radiateur (3) du moteur et destiné au refroidissement du moteur à combustion interne (2), et des moyens de freinage pour freiner le véhicule de traction, un flux de fluide de refroidissement liquide étant guidé en boucle dans le circuit de refroidissement du moteur (4), les moyens de freinage comportant au moins un frein rhéostatique électrique avec au moins une résistance de freinage (6), et un circuit de refroidissement des freins (7) parcouru par un liquide de refroidissement étant prévu pour le refroidissement de la résistance de freinage (6), **caractérisé en ce qu'**il est prévu un circuit de refroidissement secondaire (11), dans lequel circule un autre flux de fluide de refroidissement liquide, et **en ce que** le circuit de refroidissement secondaire (11) et le circuit de refroidissement des freins (7) sont raccordés à au moins un échangeur de chaleur (8) du circuit de refroidissement des freins, les déperditions de chaleur de la résistance de freinage (6) étant absorbées par le circuit de refroidissement des freins (7) et pouvant être transférées vers le circuit de refroidissement secondaire (11) par l'intermédiaire de l'échangeur de chaleur (8) du circuit de refroidissement des freins, et **en ce que** la taille de la surface d'échange thermique du radiateur (3) du moteur, sur laquelle et/ou dans laquelle circule le flux de fluide de refroidissement liquide pendant le refroidissement, peut être commandée ou réglée automatiquement en fonction de la température du fluide de refroidissement dans le moteur à combustion interne (2), le radiateur (3) du moteur comportant une pluralité d'échangeurs de chaleur (27, 28), au moins un des échangeurs de chaleur (27) étant raccordé, indépendamment de l'état de charge du moteur à combustion interne (2), au flux de fluide de refroidissement circulant dans le circuit de refroidissement du moteur (4), et au moins un autre échangeur de chaleur (28) étant apte à être raccordé , en fonction de l'état de charge, au flux de fluide de refroidissement circulant dans le circuit de refroidissement du moteur (4) ou à l'autre flux de fluide de refroidissement circulant dans le circuit de refroidissement secondaire (11).

2. Véhicule de traction selon la revendication 1, **caractérisé en ce qu'**en cas de dépassement vers le haut d'une température limite prédéfinie du flux de fluide de refroidissement dans le moteur à combustion interne (2), de préférence lorsque le moteur à combustion interne (2) fonctionne en pleine charge, la totalité de la surface de transfert thermique du radiateur (3) du moteur est prévue pour le refroidissement du flux de fluide de refroidissement.

3. Véhicule de traction selon la revendication 1 ou 2, **caractérisé en ce qu'**en cas de dépassement vers le haut d'une température limite prédéfinie du flux de fluide de refroidissement dans le moteur à combustion interne (2), de préférence lorsque le moteur à combustion interne (2) fonctionne en pleine charge, une plus grande surface de transfert thermique du radiateur (3) du moteur est prévue pour le refroidissement du flux de fluide de refroidissement, et en cas de dépassement vers le bas d'une température limite prédéfinie du flux de fluide de refroidissement dans le moteur à combustion interne (2), de préférence lorsque le moteur à combustion interne (2) fonctionne en charge partielle, une plus petite surface de transfert thermique du radiateur (3) du moteur est prévue pour le refroidissement du flux de fluide de refroidissement.

4. Véhicule de traction selon la revendication 3, **caractérisé en ce que** le rapport de surface entre la plus grande surface de transfert thermique et la plus petite surface de transfert thermique est égal à au moins 60 : 40, de préférence à au moins 70 : 30, en particulier à environ 80 : 20.

5. Véhicule de traction selon l'une quelconque des revendications précédentes, **caractérisé en ce que** la taille de la surface de transfert thermique pendant le refroidissement du flux de fluide de refroidissement peut être commandée et réglée de telle sorte que la température du fluide de refroidissement dans le moteur à combustion interne (2), quel que soit l'état de charge du moteur à combustion interne (2), est supérieure à 55°C, de préférence supérieure à 65°C et est inférieure à 105°C, en particulier, de préférence inférieure à 95°C.

6. Véhicule de traction selon l'une quelconque des revendications précédentes, **caractérisé en ce que** le circuit de refroidissement secondaire (11) pour le refroidissement de l'autre flux de fluide de refroidissement est apte à être raccordé, en cas de besoin, au radiateur (3) du moteur.

7. Véhicule de traction selon l'une quelconque des revendications précédentes, **caractérisé en ce qu'**il est prévu au moins un dispositif de commutation (35) pour établir une liaison fluidique entre le circuit de refroidissement secondaire (11) et au moins une surface de transfert thermique du radiateur (3) du moteur.

8. Véhicule de traction selon l'une quelconque des revendications précédentes, **caractérisé en ce qu'**en cas de dépassement vers le bas d'une température limite prédéfinie du flux de fluide de refroidissement dans le moteur à combustion interne (2), de préférence lorsque le moteur à combustion interne (2) fonctionne en charge partielle, au moins une partie de la surface de transfert thermique totale du radiateur (3) du moteur est prévue pour le refroidissement de l'autre flux de fluide de refroidissement circulant dans le circuit de refroidissement secondaire (11).

9. Véhicule de traction selon la revendication 8 **caractérisé en ce qu'**en cas de dépassement vers le bas d'une température limite prédéfinie du flux de fluide de refroidissement dans le moteur à combustion interne (2), de préférence lorsque le moteur à combustion interne (2) fonctionne en charge partielle, la surface de transfert thermique du radiateur (3) du moteur, laquelle n'est pas prévue pour le refroidissement du flux de fluide de refroidissement circulant dans le circuit de refroidissement du moteur (4), est prévue de préférence en totalité pour le refroidissement de l'autre flux de fluide de refroidissement circulant dans le circuit de refroidissement secondaire (11).

10. Véhicule de traction selon l'une quelconque des revendications précédentes, **caractérisé en ce que** le même fluide de refroidissement, de préférence de l'eau, circule dans le circuit de refroidissement du moteur (4) et dans le circuit de refroidissement secondaire (11).

11. Véhicule de traction selon l'une quelconque des revendications précédentes, **caractérisé en ce qu'**en cas de dépassement vers le bas d'une température prédéfinie du fluide de refroidissement dans le moteur à combustion interne (2), les déperditions de chaleur absorbées par le circuit de refroidissement secondaire (11) peuvent être transmises au moins en partie à partir du circuit de refroidissement secondaire (11) vers le circuit de refroidissement du moteur (4).

12. Véhicule de traction selon l'une quelconque des revendications précédentes, **caractérisé en ce que** le circuit de refroidissement secondaire (11) et le circuit de refroidissement du moteur (4) sont aptes à être couplés pour le transfert de chaleur via au moins un échangeur de chaleur indirect et/ou **en ce qu'**un transfert de chaleur direct est prévu par au moins un mélange partiel des flux de fluide de refroidissement du circuit de refroidissement du moteur (4) et du circuit de refroidissement secondaire (11).

13. Véhicule de traction selon l'une quelconque des revendications précédentes, **caractérisé en ce que** le circuit de refroidissement secondaire (11) comporte au moins un échangeur de chaleur (13) pour la dissipation de la chaleur vers l'environnement.

14. Véhicule de traction selon l'une quelconque des revendications précédentes, **caractérisé en ce qu'**il est prévu au moins un dispositif de mesure pour mesurer la température du liquide de refroidissement dans le circuit de refroidissement des freins (7) et/ou pour mesurer la température du fluide de refroidissement dans le circuit de refroidissement secondaire (11) et/ou dans le circuit de refroidissement du moteur (4).

15. Véhicule de traction selon l'une quelconque des revendications précédentes, **caractérisé en ce que** le circuit de refroidissement des freins (7) comporte au moins un réservoir (40) pour le liquide de refroidissement.
